# EUROPÄISCHE PATENTSCHRIFT

(11) **EP 0 657 987 B1**
(45) Veröffentlichungstag und Bekanntmachung des Hinweises auf die Patenterteilung: **18.03.1998**
(21) Anmeldenummer: 94119421.9
(22) Anmeldetag: 08.12.1994
(51) Int. Cl.: H02M 3/335

(54) **Getakteter Umrichter mit Strombegrenzung**
Switching converter with current limitation
Convertisseur à découpage avec limitation de courant

(30) Priorität: 10.12.1993 EP 93119990
(43) Veröffentlichungstag der Anmeldung: 14.06.1995
(73) Patentinhaber: SIEMENS AKTIENGESELLSCHAFT, 80333 München (DE)
(72) Erfinder: Immler, Josef, Dipl.-Ing. (FH), D-82178 Puchheim (DE)

(56) Entgegenhaltungen:
- EP-A- 0 247 687
- DE-A- 2 838 009
- US-A- 4 975 820
- PATENT ABSTRACTS OF JAPAN vol. 14, no. 328 (E-952) 13. Juli 1990 & JP-A-02 111 257

## Beschreibung

Die Erfindung bezieht sich auf einen im Oberbegriff des Patentanspruchs 1 angegebenen getakteten Umrichter mit Strombegrenzung.

Ein derartiger Umrichter ist bereits aus R. Glöckl: "Der Einsatz von SIPMOS-Transistoren in Schaltnetzteilen", Feinwirktechnik und Meßtechnik 89 (1981), 4, Seite 187 bis 195, insbesondere Seite 190, Bild 4 bekannt. Der bekannte Umrichter enthält einen Komparator zur dynamischen Strombegrenzung, dessen Istwert-Eingang über ein RC-Glied an einen im primärseitigen Hauptstromkreis des Umrichters liegenden Strommeßwiderstand angeschlossen ist.

Ferner ist aus der DE AS 28 38 009 ein Umrichter bekannt, bei dem eine zweistufige Strombegrenzung vorgesehen ist. Lassen sich die im primärseitigen Hauptstromkreis des Umrichters fließenden Stromimpulse wegen der Speicherzeiten des Schalttransistors nicht weiter verkürzen, sorgt eine zusätzliche Vorrichtung dafür, daß Stromimpulse ausgelassen werden.

Aufgabe der Erfindung ist es, einen im Oberbegriff des Patentanspruchs 1 angegebenen getakteten Umrichter derart auszubilden, daß sich für die den Zusammenhang zwischen Ausgangsstrom und Ausgangsspannung darstellende Ausgangskennlinie ein Verlauf ergibt, bei dem der Strom mit sinkender Ausgangsspannung abnimmt.

Gemäß der Erfindung wird der getaktete Umrichter zur Lösung dieser Aufgabe in der im kennzeichnenden Teil des Patentanspruches 1 angegebenen Weise ausgebildet.

Dabei ergibt sich, daß ab den Einsatzpunkt der Strombegrenzung der Ausgangsstrom so gesteuert werden kann, daß der Ausgangsstrom mit absinkender Ausgangsspannung gleich, oder ab einem einstellbaren Wert der Ausgangsspannung absinkt.

In Verbindung mit dem bipolaren Transistor als Stromquelle können sich bei positiver Ausgangsspannung die Maßnahmen nach Anspruch 3 und bei negativer Ausgangsspannung die Maßnahmen nach Anspruch 4 als zweckmäßig erweisen.

Besteht zwischen Eingang und Ausgang des Umrichters eine Potentialtrennung, so sind die Maßnahmen nach Anspruch 5 von Vorteil.

Bei der Weiterbildung nach Anspruch 6 wird der Meßwiderstand zugleich für die gewünschte Strombegrenzung und eine Regelung der Spannung durch unterlagerte Stromregelung verwendet.

Durch die Maßnahmen nach Anspruch 7 ergibt sich eine dritte Strombegrenzung.

Der getaktete Umrichter läßt sich vorteilhaft zur Speisung von Einrichtungen der elektrischen Nachrichtenübertragungstechnik verwenden.

Die Erfindung wird anhand der in den Figuren 1 bis 4 dargestellten Ausführungsbeispiele und den in Figur 5 und 6 gezeigten Diagramme näher erläutert.

Es zeigen:

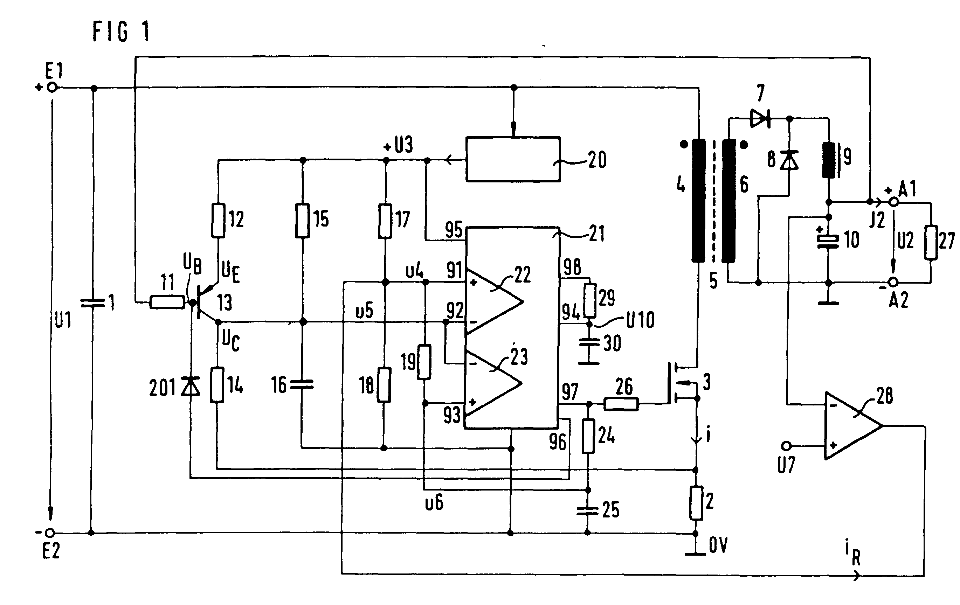

- Fig. 1: einen getakteten Umrichter mit Strombegrenzung bei positiver Ausgangsspannung,

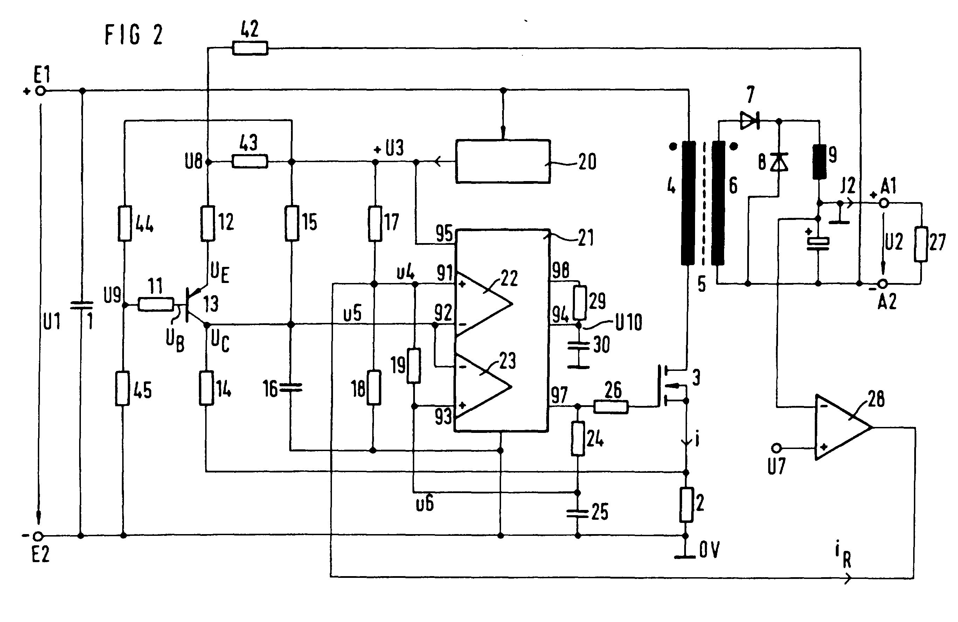

- Fig. 2: einen getakteten Umrichter mit Strombegrenzung bei negativer Ausgangsspannung,

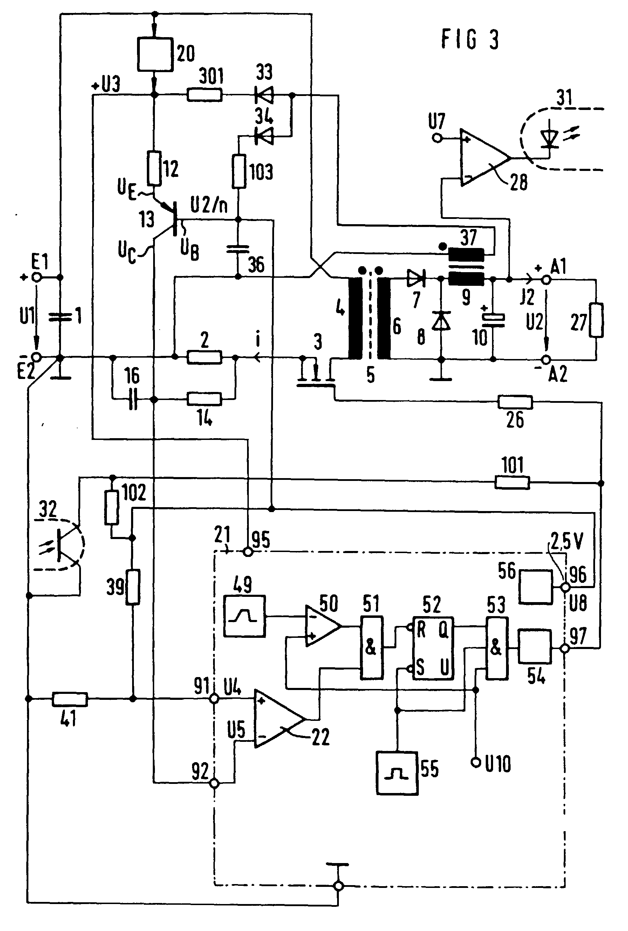

- Fig. 3: einen Durchflußumrichter mit Strombegrenzung und Potentialtrennung zwischen Eingang und Ausgang,

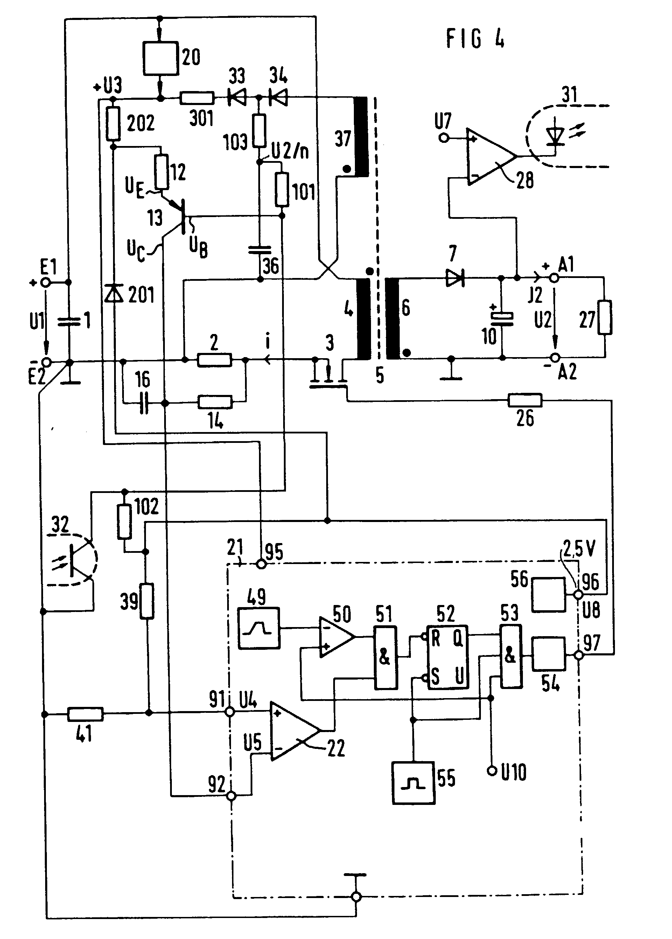

- Fig. 4: einen Sperrwandler mit Strombegrenzung und Potentialtrennung zwischen Eingang und Ausgang,

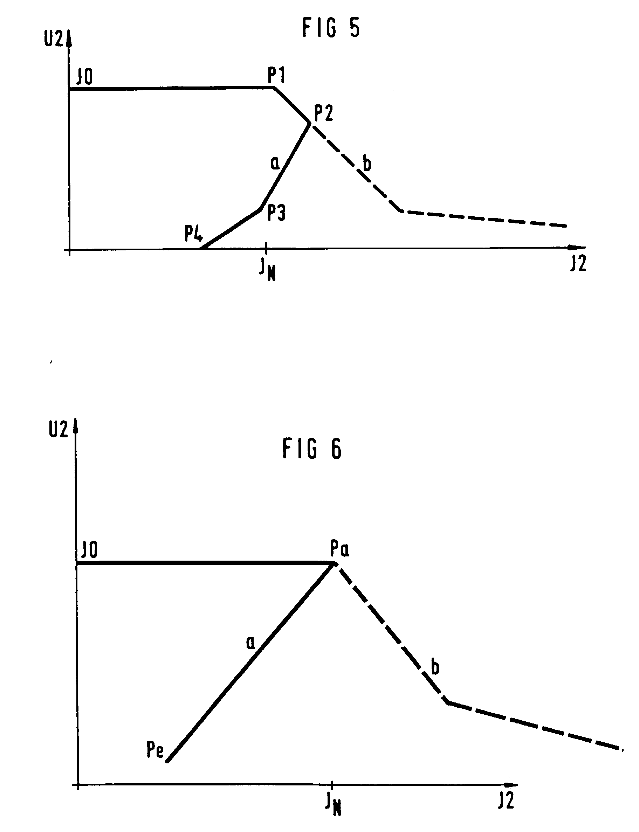

- Fig. 5: zeigt die Abhängigkeit der Ausgangsspannung vom Ausgangsstrom für die Umrichter nach den Figuren 1 und 2,
- Fig. 6: zeigt die Abhängigkeit der Ausgangsspannung vom Ausgangsstrom für die Umrichter nach den Figuren 3 und 4.

Fig. 1 zeigt einen Schaltregler, der als Gleichspannungs- bzw. DC/DC-Umrichter dient und als Eintakt-Durchflußumrichter ausgebildet ist. An seinem Ausgang A1, A2 liegt die auf einen konstanten Wert geregelte Spannung U2. Der Minuspol A2 des Ausgangs liegt an Bezugspotential 0 V bzw. Masse. Der Pluspol A1 führt gegenüber dem Bezugspotential die positive Ausgangsspannung U2.

Bei dem in Fig. 1 gezeigten Eintakt-Durchflußumrichter liegt die Eingangsspannung U1 am Kondensator 1 und die Ausgangsspannung U2 am Kondensator 10. Parallel zum Kondensator 1 liegt eine aus der Primärwicklung 4 des Transformators 5, der Drain-Source-Strecke des Feldeffekttransistors 3 und dem Widerstand 2 gebildete Serienschaltung. Zwischen der Sekundärwicklung 6 des Transformators 5 und dem Kondensator 10 liegt die Gleichrichterdiode 7. In einem auf die Gleichrichterdiode 7 folgenden Querzweig ist die Freilaufdiode 8 angeordnet. In einem Längszweig zwischen Freilaufdiode 8 und Kondensator 10 liegt die Drossel 9.

Der Feldeffekttransistor 3 dient als Leistungsschalter, der Widerstand 2 als Strommeßwiderstand. Der Verbindungspunkt von Kondensator 16 und Widerstand 2 liegt wie der Minuspol der nicht dargestellten Eingangsspannungsquelle an Masse bzw. Bezugspotential.

Die am Strommeßwiderstand 2 abfallende stromproportionale Spannung wird mit Hilfe des Widerstandes 14 entkoppelt, mit dem Widerstand 15 von der Hilfsspannung U3 voreingestellt und mit Hilfe des Kondensators 16 gesiebt. Mit Hilfe des Kondensators 16 wird vor allem die Anfangsstromspitze der im primärseitigen Hauptstromkreis fließenden Stromimpulse geglättet, um ein Fehlverhalten des Komparators 22 beim Einschalten des FeFT 3 zu vermeiden.

Die Steuerelektrode des Feldeffekttransistors 3 ist über den Widerstand 26 an den Anschluß 97 der Steuervorrichtung 21 angeschlossen. Die Steuervorrichtung 21 ist vorzugsweise ein integrierter Steuerbaustein, insbesondere vom Typ TDA 4916. Die Steuervorrichtung, die am Ausgang 97 imulsdauermodulierte, den Feldeffekttransistor 3 leitend steuernde Einschaltimpulse abgibt, enthält u.a. die Komparatoren 22 und 23. Zwischen den nicht invertierenden (+) Eingängen der Komparatoren 22 und 23 liegt der Widerstand 19. Weitere Einzelheiten der Steuervorrichtung 21 gehen aus Fig. 3 hervor.

Die aus den Widerständen 17 und 18 bestehende Serienschaltung liegt zwischen der Hilfsspannung U3 und Bezugspotential. Der Verbindungspunkt der Widerstände 17 und 18 ist mit dem Ausgang des Fehlersignalverstärkers 28 und mit dem nicht invertierenden Eingang (+) des Komparators 22 verbunden, der als Eingang für den Sollwert des Stromes dient.

Der invertierende Eingang des Komparators 22 ist über den Widerstand 14 mit dem gegenüber dem Bezugspotential Spannung führenden Anschluß des Strommeßwiderstandes 2 verbunden. Der Ausgang des Komparators 22 ist an einen Eingang der UND-Schaltung 51 nach Fig. 3 geführt.

Als steuerbare Stromquelle für die zweite Strombegrenzung dient der bipolare Transistor 13 vom Typ pnp. Die Basis des Transistors 13 ist über den Widerstand 11 an den Pluspol A1 der Ausgangsspannung und über die Diode mit einer Referenzspannungsquelle 96 des Steuerbausteins 21 verbunden. Der Emitter des Transistors 13 ist über den Gegenkopplungswiderstand 12 mit der Hilfsspannung +U3 verbunden, die als positive Vergleichsspannung dient. Der Kollektor des Transistors 13 ist unmittelbar mit dem invertierenden (-) Eingang des Komparators 22 und 23 verbunden.

Der Komparator 22 dient zur Regelung der Ausgangsspannung U2 durch Spannungsregelung mit unterlagerter Stromregelung (Current-Mode-Spannungsregelung). Dabei dient als Sollwert des Stromes die Spannung u4, die durch den Spannungsregler 28 gesteuert wird. Der Komparator 22 vergleicht die von der Ausgangsspannung U2 abhängige Spannung u4 als Sollwert mit der vom pulsförmigen Eingangsstrom i abhängigen Spannung u5 als Istwert.

Der Fehlersignalverstärker 28, dessen invertierender Eingang am Pluspol A1 des Umrichterausgangs und dessen nicht invertierender Eingang an der Referenzspannung U7 liegt, bietet an seinem Ausgang einen Widerstand, der mit wachsender Ausgangsspannung U2 kleiner wird. Der Ausgang des Fehlersignalverstärkers 28 ist galvanisch mit dem nicht invertierten (+) Eingang (+) des Komparators 22 verbunden. Der Fehlersignalverstärker 28 kann bei Überschreiten eines vorgegebenen Wertes der Ausgangsspannung U2 die als Sollwert dienende Spannung u4 dadurch absenken, daß er über den Widerstand 17 einen zusätzlichen Strom fließen läßt. Eine Anhebung der Spannung u4 über den durch die Hilfsspannung U3 und den Spannungsteiler 17, 18 vorgegebenen Wert ist nicht möglich, weil der Fehlersignalverstärker 28 nur gegen Bezugspotential 0V Strom führen kann.

Der maximale Wert der Spannung u4 ist somit durch den Spannungsteiler 17, 18 vorgegeben und bewirkt, daß beim Erreichen eines vorgegebenen Grenzstromes entsprechend dem Kennlinienpunkt P1 nach Fig. 5 die Steuerschaltung 21 den Feldeffekttransistor 3 sperrt, der im primärseitigen Hauptstromkreis fließende Stromimpuls i verkürzt und die Ausgangsspannung U2 abgesenkt wird. Hieraus resultiert eine erste Strombegrenzung. Die erste Strombegrenzung setzt ein, sobald bei ansteigendem Ausgangsstrom I2 am Punkt P1 der Ausgang des Fehlersignalverstärkers 28 ganz sperrt und somit am Sollwerteingang des Komparators 22 ein vorgegebener maximaler Wert der Sollwertspannung erreicht ist. Wird - ausgehend von diesem Betriebszustand - der Lastwiderstand 27 weiter verringert, ist eine Begrenzung der vom Umrichter aufgenommenen Leistung wirksam. Auf diese Weise ergibt sich die erste Strombegrenzung, bei der die abgegebene Leistung etwa konstant ist.

Die erste Strombegrenzung bewirkt, daß die Ausgangsspannung U2 mit wachsendem Ausgangsstrom absinkt, sobald der Grenzstrom gemäß Punkt P1 überschritten und so der Regelbereich der Spannungsregelung verlassen wird.

Wird dabei der Einsatzpunkt P2 erreicht, so wird der Verstärkertransistor 13 leitend gesteuert.

Sinkt die Ausgangsspannung U2 über den Einsatzpunkt P2 nach Fig. 5 hinaus weiter ab, so steigt der Kollektorstrom des Transistors 13 an. Der Kollektorstrom des Transistors 13 bewirkt dabei am Widerstand 14 einen zusätzlichen Spannungsabfall. Der Komparator 22 erhält daher an seinem invertierenden Eingang bei absinkender Ausgangsspannung U2 eine zunehmend höhere Spannung, die so einen über dem wirklichen Wert des Ausgangsstromes I2 liegenden Ausgangsstromsignal vorgibt.

Die zweite Strombegrenzung wird somit wirksam, sobald die erste Strombegrenzung angesprochen und die Ausgangsspannung U2 auf einen vorgegebenen Wert abgesenkt ist.

Die am invertierenden Eingang (-) des Komparators 22 liegende Spannung u5 wird zu einem wesentlichen Teil vom Stromimpuls i erzeugt, der am Strommeßwiderstand 2 in einen Spannungsimpuls umgewandelt wird. Der dabei entstehende Spannungsimpuls wird mittels der Widerstände 14 und 15 zu einem für die Auswertung brauchbaren Spannungswert angehoben, mit Hilfe des Kondensators 16 gesiebt und im Komparator 22 mit dem Spannungswert u4 verglichen. Der Spannungswert u4 bestimmt dabei den zulässigen Maximalstrom.

Übersteigt die Spannung u5 den vorgegebenen Wert u4, so wird die Ausgangsspannung U2 durch die Wirkung der ersten Strombegrenzung abgesenkt. Sobald die Ausgangsspannung U2 unter den um den Betrag der Basis-Emitterspannung des Transistors 13 verringerten Wert der als Vergleichsspannung dienenden Hilfsspannung U3 absinkt, steigt der Kollektorstrom des Transistors 13 an, erhöht die Spannung u5 und bewirkt damit eine weitere Absenkung des Ausgangstromes I2.

Der nicht invertierende (+) Eingang des Komparators 23 ist an den Ausgang des RC-Gliedes 24, 25 gelegt, das an den Anschluß 97 der Steuerschaltung 21 angeschlossen ist. Zwischen dem nicht invertierenden Eingang des Komparators 22 und dem nicht invertierenden Eingang des Komparators 23 liegt der Widerstand 19.

Die invertierenden (-) Eingänge der Komparatoren 22 und 23 liegen am Anschluß 92, der über den Widerstand 14 mit dem gegenüber Bezugspotential Spannung führenden Anschluß des Strommeßwiderstandes 2 verbunden ist.

Der Widerstand 11 kann bei hoher Ausgangsspannung U2 statt an den Anschluß A1 an einen Spannungsteiler zwischen den Anschlüssen A1 und A2 angeschlossen werden.

Der in Fig. 2 gezeigte Schaltregler stimmt mit dem nach Fig. 1 weitgehend überein. Abweichend ist der Pluspol A1 des Ausgangs mit Bezugspotential 0V bzw. Masse verbunden.

Der Minuspol A2 führt gegenüber dem Bezugspotential 0 V die negative Ausgangsspannung U2. Die Basis des Transistors 13 ist über den Widerstand 11 an die Referenzspannung U9, der Emitter des Transistors 13 über den Widerstand 12 an die Spannung U8 gelegt. Diese Spannung U8 liegt am Abgriff des aus den Widerständen 42 und 43 bestehenden Spannungsteilers, der zwischen dem Minuspol A2 des Ausgangs und der Hilfsspannung +U3 angeordnet ist.

Die Referenzspannung U9 wird mit Hilfe des Spannungsteilers 44, 45 aus der Hilfsspannung +U3 gewonnen.

Die Regelung der Ausgangsspannung U2 sowie die erste und zweite Strombegrenzung erfolgen wie bei dem Umrichter nach Fig. 1, allerdings mit der Maßgabe, daß sich beim Umrichter nach Fig. 2 die Emitterspannung des Transistors 13 mit der Ausgangsspannung gegenüber der Hilfsspannung U9 ändert, an die die Basis des Transistors 13 über den Widerstand 11 geführt ist.

In Fig. 3 ist ein Gleichspannungsumrichter gezeigt, der als Eintakt-Durchflußumrichter mit Potentialtrennung zwischen Ein- und Ausgang ausgebildet ist. Der primärseitige und sekundärseitige Leistungskreis sind mittels des Übertragers 5 potentialgetrennt. Zur entsprechenden Potentialtrennung im Regelkreis dient der Optokoppler 31, 32, der die LED 31 und den Fototransistor 32 enthält.

Die Steuerschaltung 21 enthält eine Anordnung zur Impulsdauermodulation, mit deren Hilfe die Dauer der am Ausgang 97 abgegebenen Einschaltimpulse variiert wird. Der Rampengenerator 49 gibt eine sägezahnförmige Spannung an den invertierenden Eingang des Komparators 50 ab. Der nicht invertierende Eingang des Komparators 50 ist mit dem Steuereingang 94 der Steuerschaltung 21 verbunden.

Der Ausgang des Komparators 50 ist mit einem Eingang der UND-Schaltung 51 verbunden. Der zweite Eingang der UND-Schaltung 51 liegt am Ausgang des Komparators 22. Damit kann der Komparator 22 beim Erreichen des vorgegebenen Strompulswertes von i die am Ausgang 97 abgegebenen Einschaltimpulse zeitlich begrenzen.

Der invertierende (-) Eingang des Komparators 22 liegt am Anschluß 92, der über den Widerstand 14 mit dem gegenüber Bezugspotential Spannung führenden Anschluß des Strommeßwiderstandes 2 verbunden ist.

Der Ausgang der UND-Schaltung 51 ist an den Rücksetzeingang R des Abschalt-Flip-Flops 52 geführt. Der Setzeingang S des Abschalt-Flip-Flops 52 ist mit dem Ausgang des Taktgebers 55 verbunden.

Der Ausgang Q des Abschalt-Flip-Flops 52 ist an einen Eingang der UND-Schaltung 53 geführt. Von den beiden weiteren Eingängen der UND-Schaltung 53 liegt einer am Ausgang des Taktgebers 55. Der Ausgang der UND-Schaltung 53 ist an den Eingang des Treibers 54 geführt.

Die Steuervorrichtung 21 dient zur Regelung der Ausgangsspannung U2 durch unterlagerte Stromregelung und zur Strombegrenzung und findet wie beschrieben zweckmäßigerweise auch in den Umrichtern nach den Figuren 1, 2 und 3 Verwendung.

Beim Umrichter nach Fig. 3 verläuft der Regelkreis vom Ausgang des Umrichters über den Fehlersignalverstärker 28, den aus der lichtemittierenden Diode 31 und dem Fototransistor 32 bestehenden Optokoppler 31, 32, dem Komparator 22, dem aus den Schaltmitteln 51, 52, 53 gebildeten Pulsdauermodulator und den Treiber 54 zum Anschluß 97, der die Einschaltimpulse an den Leistungstransistor 3 abgibt.

Der Kondensator 16 wird mit einer vorgegebenen Zeitkonstante über die Widerstände 2 und 14 aufgeladen und entladen. Die Spannung am Kondensator 16 entspricht praktisch dem Momentanwert der am Widerstand 2 auftretenden Spannung. Mit Hilfe des Kondensators 16 wird vor allem die sogenannte erste Stromspitze geglättet, um ein Fehlverhalten des Komparators 22 zu vermeiden.

Der Komparator 50 vergleicht die Rampenspannung 49 mit der intern eingestellten Spannung u10 in der Steuerschaltung 21.

Das Abschalt-Flip-Flop 52 wird von der Abstiegsflanke der Taktimpulse des Taktgebers 55 gesetzt, wenn am Ausgang des UND-Gliedes 51 kein Abschaltsignal anliegt. Beim Auftreten eines Abschaltimpulses am Ausgang des UND-Gliedes 51 wird das Abschalt-Flip-Flop 52 zurückgesetzt.

Der Kollektor des Fototransistors 32 ist über den Widerstand 102 an die Referenzspannungsquelle 96 des Steuerbausteins 21 und unmittelbar an die Basis des Transistors 13, angeschlossen. Der Ist-Spannungswert am Anschluß 91 des Steuerbausteins 21 wird über den Spannungsteiler 39/41 der am Referenzspannungseingang 96 und -Pol von 21 liegt, gebildet. Zwischen dem nicht invertierenden Eingang des Komparators 22 und Bezugspotential E2 ist der Widerstand 41 angeordnet. Der Emitter des Fototransistors 32 liegt an Bezugspotential bzw. Masse.

Der Optokoppler 31, 32 überträgt ein analoges Fehlersignal von der Sekundärseite zur Primmärseite des Umrichters.

Die zur Speisung der Steuerschaltung 21 nötige Hilfsspannung U3 wird nach Inbetriebnahme des Umrichters zunächst von der stetig geregelten Hilfsspannungsquelle 20, danach während des regulären Betriebes zur Reduzierung der Verlustleistung aus der Hilfswicklung 37 des Leistungsübertragers 5 gespeist. Die Ausgangsspannung U3 der Hilfsspannungsquelle 20 wird auf einen Wert geregelt, der unter der Spannung liegt, die nach Beendigung des Einschaltvorganges an diesem Punkt über den Gleichrichter 33 erzeugt wird. Im Normalbetrieb liefert die Hilfsspannungsquelle 20 daher praktisch keinen Strom.

Die Hilfswicklung 37 ist gut mit der Hauptwicklung der Drossel 9 gekoppelt, so daß nach Gleichrichtung durch die Diode 34 und der Siebung mittels des Widerstandes 103 und des Kondensators 36 an der Basis des Transistors 13 ein zur Ausgangsspannung U2 etwa proportionaler Gleichspannungswert U2/ₙ ansteht.

Die Diode 33 entkoppelt die Spannung U2/ₙ von der Hilfspannung U3. Die Spannung U2/ₙ wird mit der Spannung U3 verglichen. Die Spannung U2/ₙ ist im Normalbetrieb etwa um 20 % höher als die von der Hilfsspannungsquelle 20 gelieferte Hilfsspannung U3.

Sinken im Falle einer Überlast die Spannungen U2 und U2/ₙ infolge der ersten Strombegrenzung unter 80 % ihres Nennwertes ab, sinkt die Hilfsspannung U3 ebenfalls ab, jedoch nur bis zu dem durch die Hilfsspannungsquelle 20 bestimmten Wert. Mit dem Absinken der Ausgangsspannung U2 sinkt die Spannung an der Drossel 9 und damit auch die induzierte Spannung an der Hilfswicklung 37. Die reduzierte induzierte Spannung bewirkt einen geringen Stromfluß über die Diode 33 und den Widerstand 301. Ist der Widerstand 301 so dimensioniert, daß der Spannungsabfall etwa 20 % der Hilfsspannung U3 beträgt, so wird beim Absinken der induzierten Spannung U37 die Basisspannung U_{2/n} stärker absinken als die Hilfsspannung U3. Mit dem Absinken der Basisspannung ist der Verlauf der Ausgangsstrom -Begrenzungskennlinie (siehe Figur 6/ Punkt Pa) sofort rückläufig. Diese ergibt sich daraus, daß die Basisspannung U2/n des Transistors 13 weiter absinkt, die Spannung U3 jedoch erhalten bleibt. Der Transistor 13 geht umsomehr in den leitenden Zustand über, je weiter die Spannungen U2 und U_{2/n} absinken.

Sinkt - ausgelöst durch die Strombegrenzung - die Spannung U2/ₙ mit der Ausgangsspannung U2 ab, steigt der Kollektorstrom des Transistors 13 an, so daß dem invertierenden Eingang des Komparators 22 eine zunehmend höhere Spannung u5 zugeführt wird. Die überhöhte Spannung u5 gibt einen über dem wirklichen Wert liegenden Ausgangsstrom I2 vor und bewirkt so den rückläufigen Verlauf der Ua/IA-Kennlinie.

Als Steuerschaltung 21 dient vorzugsweise ein Steuerbaustein vom Typ TDA 4916.

Der Umrichter kann als Durchfluß- oder als Sperrumrichter mit konstanter Taktfrequenz oder als Umrichter mit Frequenzmodulation ausgebildet sein. In den Figuren 1 bis 3 ist als Beispiel ein Eintaktdurchflußwandler mit konstanter Taktfrequenz dargestellt. In Figur 4 ist ein Sperrwandler mit Potentialtrennung zwischen Ein- und Ausgangsspannung dargestellt.

Figur 4 zeigt einen Sperrwandler mit Strombegrenzerschaltung wie oben beschrieben. Der Kondensator 36 hat in diesem Falle einen höheren Wert, da er die von der Hilfswicklung 37 erzeugte und gegenüber dem Gateimpuls 47 um 180 Grad verschobene Spannung U37 glätten muß. Der Widerstand 101 entkoppelt die Basis von 13 vom Kondensator 36 damit dieser den vom Optokoppler 31/32 übertragenen Regelvorgang nicht zu stark im Frequenzverhalten beeinflußt. In Anwendungsfällen wo die Versorgungsspannung U3 konstant ist - weil z.B. die Einspeisung 33 nicht benötigt wird und diese weggelassen ist, oder der Widerstand 301 relativ hochohmig ist - ergibt sich die Kennlinie nach Figur 6. Bei geringerem Ausgangsstrom ist auch der Strom i über den Widerstand 2 sehr niedrig; damit dennoch die Istwertspannung U5 auf die Sollwertspannung U6 angehoben wird muß der Transistor 13 einen relativ hohen Kollektorstrom liefern. In diesem Betriebszustand steuert der Kollektor des Optokopplertransistors 32 die Basis des Transistors 13 unter den Wert der Referenzspannung 96 und somit fließt über die Diode 201 ein - durch den Widerstand 12 begrenzter - Strom, der gemeinsam mit dem über 202 fließenden eine Spannungsanhebung am Widerstand 14 bewirkt.

Fig. 5 zeigt die Abhängigkeit der Ausgangsspannung U2 vom Ausgangsstrom I2. Bei Ausgangsströmen I2 unterhalb des Nennstromes I_{N} ist die Ausgangsspannung U2 praktisch konstant. Wird der Nennwert I_{N} des Ausgangsstromes I2 überschritten, so sinkt die Ausgangsspannung U2 zunächst ab. Ohne den Transistor 13 ergäbe sich der strichliert dargestellte Verlauf b, der nur auf der Wirkung des Komparators 22 beruht. Mit der Aktivierung des Transistors 13 stellt sich im Bereich der Kennlinie zwischen den Kennlinienpunkten P2 und P3 die rücklaufende Kennlinie ein. Der Komparator 3, 23 verhindert, daß der Ausgangsstrom am Kennlinienpunkt P3 wieder zu steigen beginnt. Ein Ansprechen des Komparators 23 führt vielmehr zu dem rücklaufenden Abschnitt zwischen den Kennlinienpunkten P3 und P4.

Fig. 5 zeigt strichliert eine sogenannte auslaufende Uₐ/Iₐ-Kennlinie b und als durchgezogene Linie eine sogenannte rücklaufende Uₐ/Iₐ-Kennlinie a. Die rücklaufende Kennlinie a hat die Kennlinienpunkte P2 bis P4. Um die Kennlinienpunkte P1 bis P4 möglichst genau sicherzustellen und die Kennlinie a zu erhalten, sind bei den Umrichtern nach den Figuren 1 bis 5 jeweils zugleich drei verschiedene Strombegrenzungsverfahren vorgesehen. Die gestrichelte Kennlinie ergäbe sich, wenn nur die erste Strombegrenzung wirksam wäre.

Für viele Anwendungsfälle bieten die erste und die zweite Strombegrenzung einen ausreichenden Schutz. In besonderen Fällen kann jedoch unter Umständen trotz zweiter Strombegrenzung ein immer noch zu hoher Kurzschlußstrom fließen, insbesondere bei DC/DC-Umrichtern mit hoher Eingangsspannung U1, hoher Ausgangsspannnung U2, hohem Eingangsstrom I1 oder hohem Ausgangsstrom I2. Insbesondere dann, wenn der über den Übertrager 5 fließende Strom sehr steil ansteigt und die Steuerschaltung 21 wegen internen Verzögerungen diesen Strom I2 nicht schnell genug abschalten kann, ist die zusätzliche Installierung der dritten Strombegrenzung von besonderem Vorteil.

Fig. 6 zeigt die Abhängigkeit der Ausgangsspannung U2 vom Ausgangsstrom I2. Bei Ausgangsströmen I2 unterhalb des Nennstromes I_{N} ist die Ausgangsspannung U2 praktisch konstant. Wird der Nennwert I_{N} des Ausgangsstromes I2 überschritten, so sinkt die Ausgangsspannung U2 ab. Ohne den Transistor 13 ergäbe sich der strichliert dargestellte Verlauf b, der nur auf der Wirkung des Komparators 22 beruht. Mit der Aktivierung des Transistors 13 stellt sich im Bereich der Kennlinie zwischen den Kennlinienpunkten Pa und Pe die rücklaufende Kennlinie (Teil a) ein.

Fig. 6 zeigt strichliert eine sogenannte auslaufende Uₐ/Iₐ-Kennlinie b und als durchgezogene Linie eine sogenannte rücklaufende Uₐ/Iₐ-Kennlinie a. Die rücklaufende Kennlinie a hat die Kennlinienpunkte Pa bis Pe.

## Patentansprüche

1. Getakteter Umrichter mit Strombegrenzung, mit einem im Hauptstromkreis angeordneten und mit seinem Steuereingang an einen Einschaltimpulse abgebenden Steuerausgang (97) einer Steuerschaltung (21) angeschlossenen und durch die Einschaltimpulse jeweils einschaltbaren elektronischen Schalter (3), mit einem in Serie zum elektronischen Schalter (3) angeordneten Stromsensor (2), mit einem an den Stromsensor (2) angeschlossenen Widerstand (14) und mit einem Komparator (22), an dessen Istwerteingang (-, 92) an dem der dem Stromsensor (2) abgewandte Anschluß des Widerstandes (14) angeschlossen ist um jeweils bei über einem vorgegebenem Grenzwert liegender Spannung am Istwerteingang (-, 92) einen Impulsdauermodulator (51, 52, 53) der Steuerschaltung (21) im Sinne einer Beendigung des Einschaltimpulses zu steuern, wobei der Abgriff eines zwischen einer Konstantspannung (U3) angeschlossenen und einem Bezugspotential liegenden Spannungsteilers (17, 18) an den anderen Eingang (91, 93) des Komparators (22) geführt ist,
**dadurch gekennzeichnet,**
daß über eine von der Ausgangsspannung (U2) gesteuerte Stromquelle (11, 12, 13) die Eingangsspannung am Istwerteingang oder Vergleichereingang so gesteuert wird, daß der von der Stromquelle (11, 12, 13) abgegebene Strom mit sinkender Ausgangsspannung (U2) zunimmt,
daß die Stromquelle mit dem Istwert-Eingang des Komparators (22) verbunden ist und die Eingangsspannung so steuert, daß eine Strombegrenzung des Ausgangsstromes (I2) stattfindet.

2. Umrichter nach Anspruch 1,
**dadurch gekennzeichnet,**
daß die Stromquelle durch einen bipolaren Transistor (13) gebildet ist, dessen Kollektor mit dem Istwerteingang des Komparators (22) verbunden ist.

3. Umrichter nach Anspruch 2,
**dadurch gekennzeichnet**,
daß der Ausgang des Umrichters mit seinem Minuspol (A2) an Bezugspotential liegt und daß der Transistor (13) mit seinem Emitter über einen Widerstand (12) mit einer Referenzspannung (U3) und mit seiner Basis einerseits über einen Widerstand (11) mit dem Pluspol (A1) des Umrichterausgangs und andererseits mit der Kathode einer Diode (201), deren anderer Anschluß mit der Referenzspannung der Steuerschaltung (21) verbunden ist.

4. Umrichter nach Anspruch 2,
**dadurch gekennzeichnet**,
daß der Ausgang des Umrichters mit seinem Pluspol (A1) an Bezugspotential liegt und daß der Transistor (13) mit seinem Emitter über einen Widerstand (12) mit dem Abgriff eines zwischen dem Minuspol (A1) des Umrichterausgangs und einer Hilfsspannung (U3) liegenden Spannungsteilers (30, 31) und mit seiner Basis über einen Widerstand (11) mit einer Referenzspannung (U9) verbunden ist.

5. Umrichter nach Anspruch 2,
**dadurch gekennzeichnet**,
daß der Eingang und der Ausgang des Umrichters mit Hilfe eines Übertragers (5) potentialgetrennt sind, daß an eine Hilfswicklung (37) des Übertragers eine Gleichrichterschaltung (34, 103, 36) angeschlossen ist, an deren Ausgang eine aus einem Kondensator (36) und einem Widerstand (102) bestehende Teilschaltung liegt und daß der Transistor (13) mit seiner Basis an den Ausgang der Gleichrichterschaltung (34, 103, 101) und mit seinem Emitter über einen Widerstand (12) an eine Hilfsspannung (U3) geführt ist.

6. Umrichter nach einem der Ansprüche 1 bis 5,
**dadurch gekennzeichnet,**
daß die Ausgangsspannung des Umrichters mittels Spannungsregelung durch unterlagerte Stromregelung auf einen konstanten Wert regelbar ist.

7. Umrichter nach einem der Ansprüche 1 bis 6,
**dadurch gekennzeichnet,**
daß die Steuerschaltung (21) einen weiteren Komparator (23) enthält, daß die invertierenden Eingänge der beiden Komparatoren (22, 23) miteinander verbunden sind und daß der nicht invertierende Eingang des weiteren Komparators (23) am Ausgang eines RC-Gliedes (24, 25) liegt, das an den Steuerausgang (97) der Steuerschaltung (21) angeschlossen ist, daß zwischen den nicht invertierenden Eingängen der beiden Komparatoren (22, 23) ein Widerstand (19) angeordnet ist und daß auch der weitere Komparator (23) den Impulsdauermodulator (51, 52, 53) der Steuerschaltung im Sinne einer Beendigung des Einschaltimpulses steuert.

## Claims

1. Clocked converter with current limiting, having an electronic switch (3), which is arranged in the main circuit, is connected by its control input to a control output (97) of a control circuit (21), which control output emits turn-on pulses, and can be turned on by each of the turn-on pulses, having a current sensor (2) arranged in series with the electronic switch (3), having a resistor (14) connected to the current sensor (2), and having a comparator (22) having an actual value input (-,92), to which that terminal of the resistor (14) which is remote from the current sensor (2) is connected, in order to control a pulse duration modulator (51, 52, 53) of the control circuit (21) in the sense of ending the turn-on pulse each time the voltage at the actual value input (-, 92) lies above a predetermined limit value, the tap of a voltage divider (17, 18), which is connected between a constant voltage (U3) and a reference-earth potential, being routed to the other input (91, 93) of the comparator (22), characterized in that the input voltage at the actual value input or comparator input is controlled by means of a current source (11, 12, 13), which is controlled by the output voltage (U2), in such a way that the current output by the current source (11, 12, 13) increases as the output voltage (U2) decreases, and in that the current source is connected to the actual value input of the comparator (22) and controls the input voltage in such a way that current limiting of the output current (I2) takes place.

2. Converter according to Claim 1, characterized in that the current source is formed by a bipolar transistor (13) whose collector is connected to the actual value input of the comparator (22).

3. Converter according to Claim 2, characterized in that the output of the converter is connected by its negative pole (A2) to reference-earth potential, and in that the emitter of the transistor (13) is connected via a resistor (12) to a reference voltage (U3), and the base of the transistor (13) is connected, on the one hand, to the positive pole (A1) of the converter output via a resistor (11) and, on the other hand, to the cathode of a diode (201), the other terminal of which is connected to the reference voltage of the control circuit (21).

4. Converter according to Claim 2, characterized in that the output of the converter is connected by its positive pole (A1) to reference-earth potential, and in that the emitter of the transistor (13) is connected via a resistor (12) to the tap of a voltage divider (30, 31), which is connected between the negative pole (A2) of the converter output and an auxiliary voltage (U3), and the base of the transistor (13) is connected via a resistor (11) to a reference voltage (U9).

5. Converter according to Claim 2, characterized in that the input and the output of the converter are isolated in terms of potential with the aid of a transformer (5), in that a rectifier circuit (34, 103, 101) is connected to an auxiliary winding (37) of the transformer, a subcircuit comprising a capacitor (36) and a resistor (102) being connected to the output of the said rectifier circuit, and in that the base of the transistor (13) is routed to the output of the rectifier circuit (34, 103, 101) and the emitter of the transistor (13) is routed via a resistor (12) to an auxiliary voltage (U3).

6. Converter according to one of Claims 1 to 5, characterized in that the output voltage of the converter can be regulated to a constant value by means of voltage regulation by secondary current regulation.

7. Converter according to one of Claims 1 to 6, characterized in that the control circuit (21) contains a further comparator (23), in that the inverting inputs of the two comparators (22, 23) are connected to one another, and in that the non-inverting input of the further comparator (23) is connected to the output of an RC element (24, 25) which is connected to the control output (97) of the control circuit (21), in that a resistor (l9) is arranged between the non-inverting inputs of the two comparators (22, 23), and in that the further comparator (23) also controls the pulse duration modulator (51, 52, 53) of the control circuit in the sense of ending the turn-on pulse.

## Revendications

1. Convertisseur à découpage avec limitation de courant, comprenant un contacteur électronique (3), qui est monté dans le circuit principal, qui est raccordé par son entrée de commande à une sortie de commande (97), fournissant des impulsions de fermeture, d'un circuit de commande (21) et qui peut être fermé par les impulsions de fermeture, un détecteur de courant (2), qui est monté en série avec le contacteur électronique (3), une résistance (14), qui est raccordée au détecteur de courant (2), et un comparateur (22) dont l'entrée de valeur réelle (-, 92) est raccordée à la borne, éloignée du détecteur de courant (2), de la résistance (14), afin de commander, pour une tension à l'entrée de valeur réelle (-, 92) supérieure à une valeur limite prédéterminée, un modulateur de largeur d'impulsions (51, 52, 53) du circuit de commande (21) de manière à mettre un terme à une impulsion de fermeture, la prise d'un diviseur de tension (17, 18), se trouvant entre une tension constante (U3) et un potentiel de référence, étant reliée à l'autre entrée (91) du comparateur (22),
caractérisé par le fait
que la tension d'entrée à l'entrée de valeur réelle ou entrée de comparateur est commandée par l'intermédiaire d'une source de courant (11, 12, 13) commandée par la tension de sortie (U2) de telle sorte que le courant fourni par la source de courant (11, 12, 13) augmente lorsque la tension de sortie (U2) diminue,
et que la source de courant est reliée à l'entrée de valeur réelle du comparateur (22) et la tension d'entrée est commandée de telle sorte qu'il se produit une limitation du courant de sortie (12).

2. Convertisseur selon la revendication 1,
caractérisé par le fait
que la source de courant est formée par un transistor bipolaire (13) dont le collecteur est relié à l'entrée de valeur réelle du comparateur (22).

3. Convertisseur selon la revendication 2,
caractérisé par le fait
que la sortie du convertisseur se trouve par son pôle négatif (A2) au potentiel de référence et que le transistor (13) est relié par son émetteur par l'intermédiaire d'une résistance (12) à une tension de référence (U3) et par sa base d'une part par l'intermédiaire d'une résistance (11) au pôle positif (A1) de la sortie de convertisseur et d'autre part à la cathode d'une diode (201) dont l'autre borne est reliée à la tension de référence du circuit de commande (21).

4. Convertisseur selon la revendication 2,
caractérisé par le fait
que la sortie du convertisseur se trouve par son pôle positif (A1) au potentiel de référence et que le transistor (13) est relié par son émetteur par l'intermédiaire d'une résistance (12) à la prise d'un diviseur de tension (42, 43) se trouvant entre le pôle négatif (A2) de la sortie de convertisseur et une tension auxiliaire (U3) et par sa base par l'intermédiaire d'une résistance (11) à une tension de référence (U9).

5. Convertisseur selon la revendication 2,
caractérisé par le fait
que l'entrée et la sortie du convertisseur ont leurs potentiels séparés à l'aide d'un transformateur (5), qu'un circuit redresseur (34, 103, 36), à la sortie duquel se trouve un circuit partiel composé d'un condensateur (36) et d'une résistance (102), est raccordé à un enroulement auxiliaire (37) du transformateur, et que le transistor (13) est relié par sa base à la sortie du circuit redresseur (34, 103, 101) et par son émetteur par l'intermédiaire d'une résistance (12) à une tension auxiliaire (U3).

6. Convertisseur selon l'une des revendications 1 à 5,
caractérisé par le fait
que la tension de sortie du convertisseur peut être réglée sur une valeur constante au moyen d'une régulation en tension avec une régulation en courant sous-jacente.

7. Convertisseur selon l'une des revendications 1 à 6,
caractérisé par le fait
que le circuit de commande (21) comporte un autre comparateur (23), que les entrées négatives des deux comparateurs (22, 23) sont reliées ensemble, que l'entrée positive de l'autre comparateur (23) se trouve à la sortie d'un circuit RC (24, 25) qui est raccordé à la sortie de commande (97) du circuit de commande (21), qu'une résistance (19) est montée entre les entrées positives des deux comparateurs (22, 23) et que l'autre comparateur (23) commande aussi le modulateur de largeur d'impulsions (51, 52, 53) de manière à mettre un terme à l'impulsion de fermeture.
